(19) **Europäisches Patentamt**

**European Patent Office**

**Office européen des brevets**

(11) Publication number : **0 432 079 A2**

(12) # EUROPEAN PATENT APPLICATION

(21) Application number : **90500108.7**

(22) Date of filing : **28.11.90**

(51) Int. Cl.⁵ : **B60C 5/24**

(30) Priority : **07.12.89 ES 8904160**

(43) Date of publication of application :
**12.06.91 Bulletin 91/24**

(84) Designated Contracting States :
**DE FR GB IT**

(71) Applicant : **Belil Creixell, José Luis
C. d'Homer, 40, 1r. 6a
E-08023 Barcelona (ES)**

(72) Inventor : **Belil Creixell, José Luis
C. d'Homer, 40, 1r. 6a
E-08023 Barcelona (ES)**

(74) Representative : **Ponti Sales, Adelaida
Paseo de Gracia, 33
E-08007 Barcelona (ES)**

(54) **Pneumatic tube for vehicle wheels and the like.**

㉟ It comprises a plurality of compartments (3) separated by partition walls (2) provided with one-way valves (4).

When the pneumatic tube receives a strong concentrated pressure, the air shifts within the tube through the valves (4), only in one sense.

Thus the damping of the tyre rebound effect is achieved.

**EP 0 432 079 A2**

Jouve, 18, rue Saint-Denis, 75001 PARIS

## PNEUMATIC TUBE FOR VEHICLE WHEELS AND THE LIKE

The present invention relates to a pneumatic tube for vehicle wheels and the like, having a remarkable damping performance on the effects produced by an abrupt pressure focused on the wheel.

The tube could be the tyre itself, and in the present specification the word tube should be understood in this sense.

### BACKGROUND OF THE INVENTION

Pneumatic wheels for vehicles are provided with an inflatable tube, sometimes formed by the tyre itself, displaying a strong rebound effect when the wheel suffers a strong concentrated pressure, either because the wheel runs on a rough ground or runs into an obstacle sticking particulary out of the ground, or because the vehicle jumps onto a track, at the end of a steep uphill slope, running at high speed.

In the above mentioned circumstances, the pneumatic wheel bears a rebound forcing an overstress onto the vehicle dampers, that sometimes prove short for damping the rebound effects of the tyres.

The Spanish Utility Model 136679 describes a tyre for vehicles, its tube being provided with transverse and longitudinal partition walls, that divide it into compartments, each provided with a feather valve, positioned with its axis in the radial direction, that communicates said compartment with a general compartment located in the part of the tyre next to the rim, so that when one of the mentioned compartments is punctured, only the air within the compartment, which is a small portion of the total volume of the tube, will blow out. This arrangement provides a tyre that doesn't blow out, but isn't useful to damp the mentioned rebound effect.

### DESCRIPTION OF THE INVENTION

The inflatable tube for vehicle wheels which is the object of the invention has been conceived in order to solve the above mentioned drawbacks. Its embodiment is simple, but extremely efficient.

The pneumatic tube for vehicle wheels and the like which is the object of the invention is characterized in that the partition walls are located in an essentially radial direction, and each wall is provided with the corresponding one-way valve, which communicates each compartment with the two adjacent compartments, forcing the air to flow only in one sense within the tube, when said tube bears a strong and concentrated pressure.

In a preferred embodiment, the air flow sense through the valves of the partition walls of the compartments is opposite to the sense of the tyre rotation.

### BRIEF DESCRIPTION OF THE DRAWINGS

For a better understanding of the description of the present invention, drawings are enclosed wherein a practical embodiment of the pneumatic tube for vehicles is shown, only by way of example.

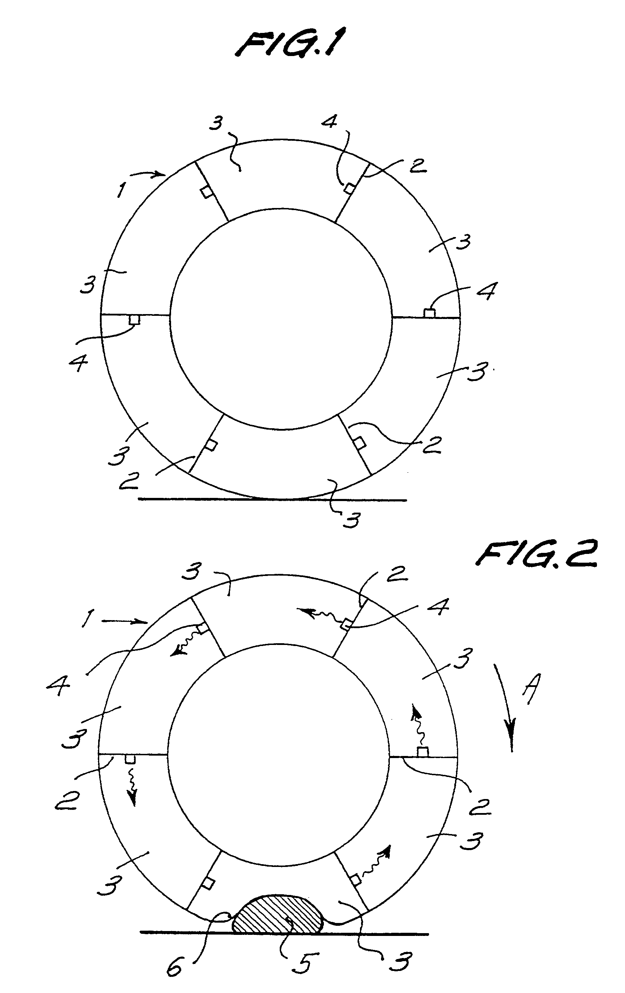

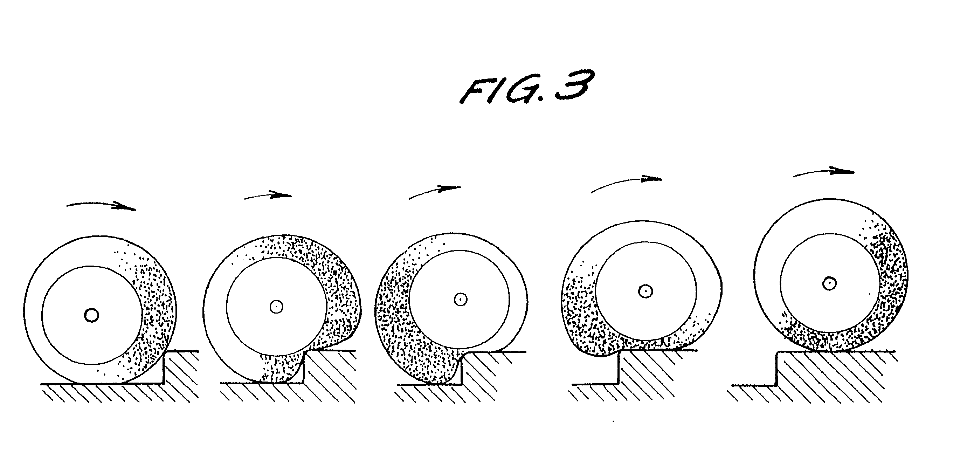

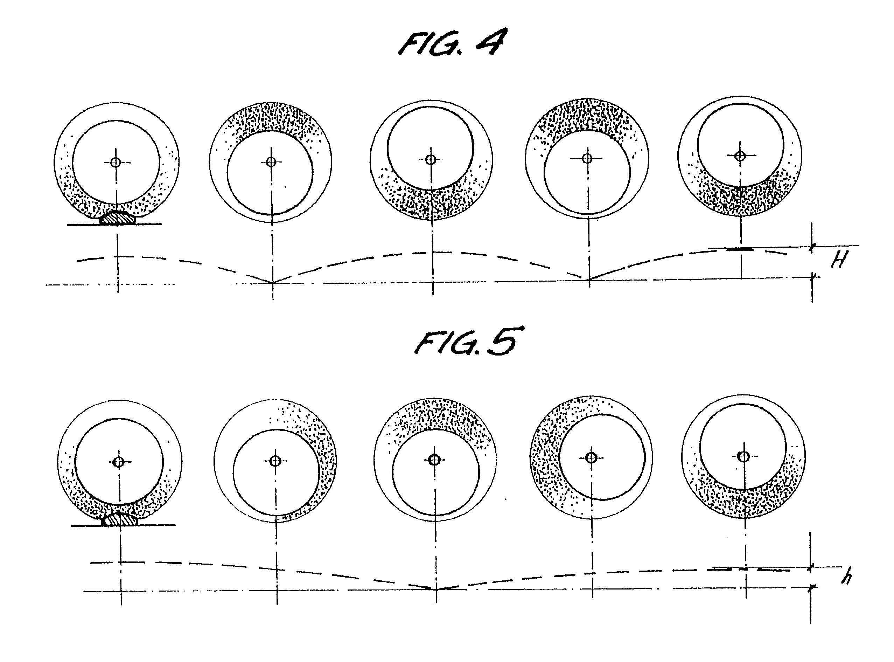

In said drawings, figure 1 is a longitudinal section view of a pneumatic tube with the above described features, having the valves of the partition walls closed ; figure 2 is a similar view to that of figure 1, but having the valves open because the tube bears a strong and concentrated pressure, due to the fact that the wheel is running over a projecting obstacle ; figure 3 shows a sequence of positions of a wheel provided with the tube of the invention, running over an obstacle ; figure 4 shows a sequence of the positions and the rebound-time diagram of a wheel with a conventional tube, running over an obstacle ; and figure 5 shows a sequence of positions and the rebound-time diagram of a wheel with the tube of the invention, running over the same obstacle in figure 4.

### DESCRIPTION OF A PREFERRED EMBODIMENT

The pneumatic tube for vehicle wheels and the like, referred to with the general reference — 1 — in the drawings, is provided with a plurality of traverse partition walls — 2 —, preferably flexible, dividing the tube in compartments — 3 —.

Each of said partition walls — 2 — is provided with a one-way valve — 4 —, that allows the flow of the air within the tube, through said valves, only in one sense. Preferably, the sense of the air flow within the tube allowed by the valves is opposed to the sense of the tyre rotation (figure 2), to avoid tube deformations when the vehicle runs into an obstacle — 5 — or suffers a strong concentrated pressure, e.g. when at the end of a steep uphill slope the vehicle raises and falls back on the ground.

Thanks to valves — 4 —, located on partition walls — 2 —, when the tube suffers a strong deformation — 6 — caused by external pressure focused on a certain zone, said pressure results in a gradual and controlled displacement of the air, starting from compartment — 3 — which is affected by the deformation — 6 —, that shifts from a compartment to the next one as the vehicle moves forward, thus damping the strong rebound effect of conventional tyres.

Moreover, when the wheel, rotating in the direction of the arrow A as shown in figure 2, finds an obstacle — 5 — sticking particulary out of the ground, the shifted air gathers in the right zone of the pneumatic tube. The left part of the tyre is deformed, vacuum is provoked in the right zone and overpressure is provoked in the left zone of the tube. The weight and the inertia of the air mass tend to help the rotation of the wheel, in the direction of the arrow A, helping to the overcoming of the obstacle, as can be seen in figure 3, showing the different positions of the wheel running over an obstacle : this figure illustrates the stages of the movement of the air mass as the wheel rotates, showing clearly how the design of the tube of the invention helps to overcome the obstacle.

On the other hand, as shown in figures 4 and 5, in which the overcoming of an obstacle is illustrated, by a wheel with a conventional tube and with the tube of the invention respectively, the wave originated by obstacle — 5 — in a zone of tube — 1 — travels 360° (figure 5), and not 180° as in a conventional tube (figure 4), wherein two waves set out concurrently in opposite directions. In figures 4 and 5, parallel to the position of the wheels, diagrams with time on the x-axis and rebound height on the y-axis are shown, wherein $H > h$, being visible that, due to the mentioned double travel, the frequency of the rebound is lower if the tube — 1 — is used, and the damping effect is thus increased.

Independent of the object of the invention are the materials used in manufacturing the components of the pneumatic tube, its shapes and dimensions, specific features of the valve, and all accessory details which may be presented, as long as they do not affect the essential nature of the invention.

As it has been mentioned at the beginning of the present specification, it is understood that the tube could be the tyre itself.

## Claims

1.  Pneumatic tube for vehicle wheels and the like, of the type provided with partition walls dividing the space therein in a plurality of compartments, each provided with corresponding one-way valves (4), characterized in that the partition walls are located in an essentially radial direction, and each wall is provided with the corresponding one-way valve (4), which communicates each compartment with the two adjacent compartments, forcing the air to flow only in one sense within the tube (1).

2.  Pneumatic tube for vehicle wheels and the like, as claimed in claim 1, characterized in that the air flow sense through the valves (4) of the partition walls (2) of the compartments (3) is opposite to the sense of the tyre rotation.

# FIG.1

# FIG.2

FIG. 3

EP 0 432 079 A2

*FIG. 4*

*FIG. 5*

EP 0 432 079 A2